(19) Europäisches Patentamt
European Patent Office
Office européen des brevets

(11) **EP 4 207 944 B1**

(12) **EUROPEAN PATENT SPECIFICATION**

(45) Date of publication and mention of the grant of the patent:
**04.12.2024 Bulletin 2024/49**

(21) Application number: **22168446.7**

(22) Date of filing: **14.04.2022**

(51) International Patent Classification (IPC):
**H05B 6/06** *(2006.01)*

(52) Cooperative Patent Classification (CPC):
**H05B 6/062**

(54) **HEATING DEVICE AND DETECTING METHOD THEREOF**

HEIZVORRICHTUNG UND DETEKTIONSVERFAHREN DAFÜR

DISPOSITIF DE CHAUFFAGE ET SON PROCÉDÉ DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2021 CN 202111667832**

(43) Date of publication of application:
**05.07.2023 Bulletin 2023/27**

(73) Proprietor: **Delta Electronics, Inc.**
**Taoyuan City 33370 (TW)**

(72) Inventors:
• **Huang, Ming-Shi**
**32063 Taoyuan City (TW)**
• **Li, Zheng-Feng**
**32063 Taoyuan City (TW)**
• **Hu, Jhih-Cheng**
**32063 Taoyuan City (TW)**
• **Lin, Yi-Liang**
**32063 Taoyuan City (TW)**
• **Meng, Yu-Min**
**32063 Taoyuan City (TW)**
• **Lin, Chun-Wei**
**32063 Taoyuan City (TW)**
• **Chang, Chun**
**32063 Taoyuan City (TW)**
• **Tan, Thiam Wee**
**32063 Taoyuan City (TW)**

(74) Representative: **Uexküll & Stolberg Partnerschaft von Patent- und Rechtsanwälten mbB**
**Beselerstraße 4**
**22607 Hamburg (DE)**

(56) References cited:
**EP-B1- 2 437 573     US-A1- 2008 238 386**

## Description

FIELD OF THE INVENTION

The present invention relates to a heating device, and more particularly to a heating device with a resonant tank and a detecting method thereof. By utilizing the natural response characteristics of the resonant tank in the negative half cycle, the inductance of the resonant tank equivalent inductor and the impedance value of the resonant tank equivalent impedance are calculated according to the current and voltage information of the resonant tank.

BACKGROUND OF THE INVENTION

In recent years, with the advancement of science and technology, the heating device for people to cook is no longer only a single choice. In addition to the heating device heated by gas fuel, there are also a variety of options such as microwave ovens, infrared ovens and electric heating stove driven by electricity. Different heating devices have their advantages or disadvantages. These various heating devices can be applied to various cooking and cooking occasions of different ingredients to meet the needs of users with different requirements.

Take an induction cooking stove as an example of the heating device. When a current flows through the induction coil (or a heating coil) of the induction cooking stove, electromagnetic induction is performed to produce eddy current, thereby heating a foodstuff container. By adjusting electricity to the induction coil, the heat quantity for heating the foodstuff container is determined. Depending on the location of the foodstuff container relative to the induction coil and the material of the foodstuff container, the heat quantity for heating the foodstuff container by the induction coil and the operating condition and the current magnitude of the induction coil are varied. Generally, in case that the locations of the foodstuff containers or the materials of the foodstuff containers are different, different equivalent parameters are sensed by a resonant tank of the conventional induction cooking stove. In accordance with a conventional technology, the resonant tank equivalent impedance value and the resonant tank equivalent inductance are calculated according to the resonant tank voltage, the resonant tank current and the phase difference between the resonant tank voltage and the resonant tank current. According to the calculation results of the resonant tank equivalent impedance value and the resonant tank equivalent inductance, the electric power of the induction coil is adjusted. However, the conventional technology still has some drawbacks. For example, the conventional heating device needs to be additionally equipped with a voltage detection circuit and a current detection circuit. Consequently, the circuitry structure of the conventional heating device is complicated, and the fabricating cost is high.

US 2008/238386 A1 relates to a method and an apparatus for providing harmonic inductive power, and more particularly for delivering current pulses providing a desired amount of pulse energy in high frequency harmonics to a load circuit for inductive heating of an article. By controlling the shape and/or frequency of such current pulses, the apparatus and method can be used to enhance the rate, intensity and/or power of inductive heating delivered by the heater coil and/or to enhance the lifetime or reduce the cost and complexity of an inductive heating power supply. Of particular significance, the apparatus and method may be used to significantly increase the power inductively delivered to a ferromagnetic or other inductively heated load, without requiring an increase of current in the heater coil. This enables new heating applications, and in some known applications, decreases the energy consumption or cooling requirements and/or increase the lifetime of the heater coil.

EP 2 437 573 B1 describes an induction-heating cooking system and an induction-heating cooking method which is operable to determine material and standing situation of a heated body in an instant manner (within about several tens of microseconds) and capable to determine whether or not the heated body is heated. The induction-heating cooking system according to one embodiment includes a LCR induction-heater having a heating coil and a resonance capacitor connected in series each other. It also includes a drive circuitry adapted to supply a high-frequency current of a given drive frequency to the heating coil, a drive voltage detector adapted to detect a drive voltage across the LCR induction-heater, and a drive current detector adapted to detect a drive current through the LCR induction-heater.

Therefore, there is a need of providing an improved heating device and a suitable detecting method in order to overcome the drawbacks of the conventional technologies.

SUMMARY OF THE INVENTION

The present invention provides a heating device and a detecting method for the heating device. The heating device includes a resonant tank. By utilizing the natural response characteristics of the resonant tank in the negative half cycle, the inductance of the resonant tank equivalent inductor and the impedance value of the resonant tank equivalent impedance are calculated according to the current and voltage information of the resonant tank. When compared with the conventional heating device, the heating device of the present invention does not need to equip with too many detection circuits. Consequently, the heating device is simplified and the cost is reduced.

In accordance with an aspect of present invention, a heating device is provided. The heating device includes a resonant circuit, a detection unit and a control unit. The resonant circuit includes an inverter circuit and a resonant tank. The inverter circuit provides a resonant tank current and a resonant tank voltage. The resonant tank includes a heating coil, a resonant tank capacitor, a resonant tank equivalent inductor and a resonant tank equivalent impedance. The detection unit is electrically coupled with the resonant circuit. The detection unit detects the resonant tank current and the resonant tank voltage to acquire a reference current value, a first zero-crossing time point, a second zero-crossing time point, a time difference, a resonant period and a negative peak current value. The reference current value is a current value of the resonant tank current when the resonant tank voltage is zero. The time difference is a time length between a time point when the resonant tank voltage is zero and the first zero-crossing time point. The resonant period is defined according to the first zero-crossing time point and the second zero-crossing time point, wherein the first zero-crossing time point is the time point corresponding to a first zero value of the resonant tank current after the resonant tank voltage is zero and the second zero-crossing time point is the time point corresponding to the second zero value of the resonant tank current after the resonant tank voltage is zero. The control unit controls the inverter circuit to output the resonant tank current and the resonant tank voltage. Consequently, a heating power of the heating coil is adjustable. The detection unit calculates an inductance of the resonant tank equivalent inductor according to a capacitance of the resonant tank capacitor, the resonant period and a first expression. The detection unit calculates an impedance value of the resonant tank equivalent impedance according to the inductance of the resonant tank equivalent inductor, the time difference, the resonant period, the reference current value, the negative peak current value and a second expression. The control unit controls the heating power of the heating coil according to the inductance of the resonant tank equivalent inductor and the impedance value of the resonant tank equivalent impedance. The first expression is expressed as a following mathematic formula:

$$L_{eq} = (\frac{T}{2\pi\sqrt{C_r}})^2,$$

where $L_{eq}$ is the inductance of the resonant tank equivalent inductor, $C_r$ is the capacitance of the resonant tank capacitor, and T is the resonant period, and the second expression is expressed as a following mathematic formula:

$$R_{eq} = \frac{2L_{eq}}{\Delta t + \frac{T}{4}} \ln(\frac{-I_0}{I_N} \frac{1}{\sin(\frac{\Delta t}{T} 2\pi)}) \quad .$$

where $R_{eq}$ is the impedance value of the resonant tank equivalent impedance, $I_0$ is the reference current value, $\Delta t$ is the time difference, and $I_N$ is the negative peak current value of the resonant tank current.

In accordance with another aspect of present invention, a detecting method for a detection unit of a heating device is provided. The heating device further includes a resonant circuit. The resonant circuit includes an inverter circuit and a resonant tank. The inverter circuit provides a resonant tank current and a resonant tank voltage. The resonant tank includes a heating coil, a resonant tank capacitor, a resonant tank equivalent inductor and a resonant tank equivalent impedance. The detecting method includes the following steps:

(a) detecting the resonant tank current and the resonant tank voltage to acquire a reference current value, a first zero-crossing time point, a second zero-crossing time point, a time difference, a resonant period and a negative peak current value, wherein the reference current value is a current value of the resonant tank current when the resonant tank voltage is zero, the time difference is a time length between a time point when the resonant tank voltage is zero and the first zero-crossing time point, and the resonant period is defined according to the first zero-crossing time point and the second zero-crossing time point, wherein the first zero-crossing time point is the time point corresponding to a first zero value of the resonant tank current after the resonant tank voltage is zero and the second zero-crossing time point is the time point corresponding to the second zero value of the resonant tank current after the resonant tank voltage is zero;

(b) calculating an inductance of the resonant tank equivalent inductor according to a capacitance of the resonant tank capacitor, the resonant period and a first expression, wherein the first expression is expressed as a following mathematic formula:

$$L_{eq} = (\frac{T}{2\pi\sqrt{C_r}})^2,$$

where $L_{eq}$ is the inductance of the resonant tank equivalent inductor, $C_r$ is the capacitance of the resonant tank capacitor, and T is the resonant period;

(c) calculating an impedance value of the resonant tank equivalent impedance according to the inductance of the resonant tank equivalent inductor, the time difference, the resonant period, the reference current value, the negative peak current value and a second expression, wherein the second expression is expressed as a following mathematic formula:

$$R_{eq} = \frac{2L_{eq}}{\Delta t + \frac{T}{4}} \ln\left(\frac{-I_0}{I_N} \frac{1}{\sin(\frac{\Delta t}{T} 2\pi)}\right) ,$$

where $R_{eq}$ is the impedance value of the resonant tank equivalent impedance, $I_0$ is the reference current value, $\Delta t$ is the time difference, and $I_N$ is the negative peak current value of the resonant tank current; and

(d) controlling a heating power of the heating coil according to the inductance of the resonant tank equivalent inductor and the impedance value of the resonant tank equivalent impedance.

The above contents of the present invention will become more readily apparent to those ordinarily skilled in the art after reviewing the following detailed description and accompanying drawings, in which:

BRIEF DESCRIPTION OF THE DRAWINGS

FIG. 1A is a schematic functional block diagram illustrating the architecture of a heating device according to an embodiment of the present invention;

FIG. 1B is schematic circuit diagram illustrating the heating device as shown in FIG. 1A;

FIG. 2 is a schematic timing waveform diagram illustrating the control voltage for controlling the upper switch and the resonant tank current in the heating device of FIG. 1B;

FIG. 3 is a schematic circuit diagram illustrating the zero-crossing detection circuit in the parameter acquisition unit of the detection unit as shown in FIG. 1B;

FIG. 4 is a schematic timing waveform diagram illustrating the control voltage for controlling the upper switch, the resonant tank current and the PWM signal from the zero-crossing detection circuit;

FIG. 5 is a schematic circuit diagram illustrating the negative peak value detection circuit in the parameter acquisition unit of the detection unit as shown in FIG. 1B; and

FIG. 6 is a flowchart illustrating a detecting method for a heating device according to an embodiment of the present invention.

DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

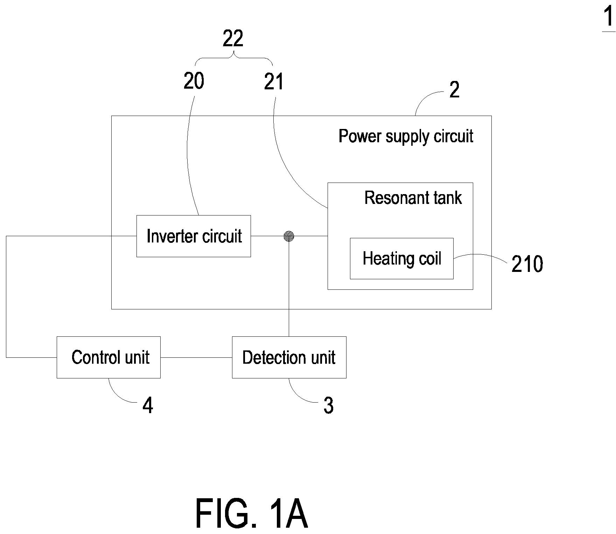

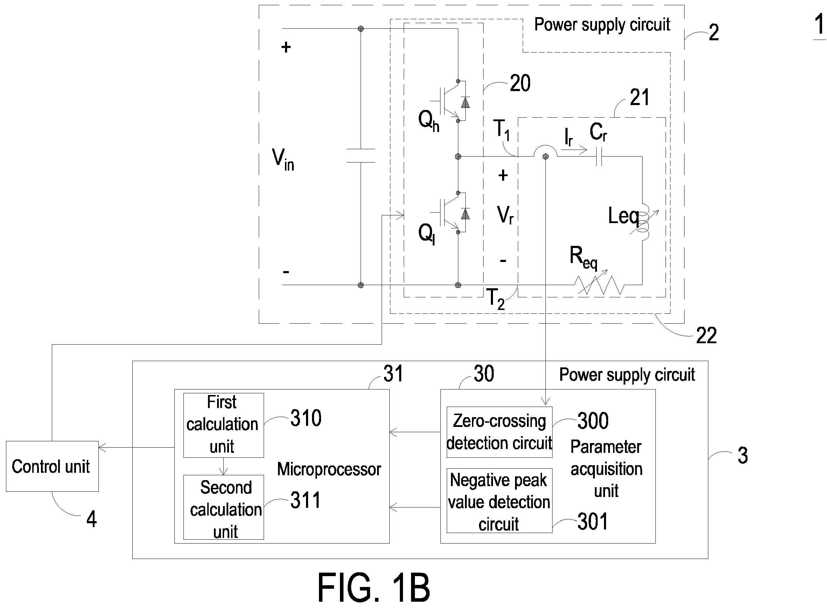

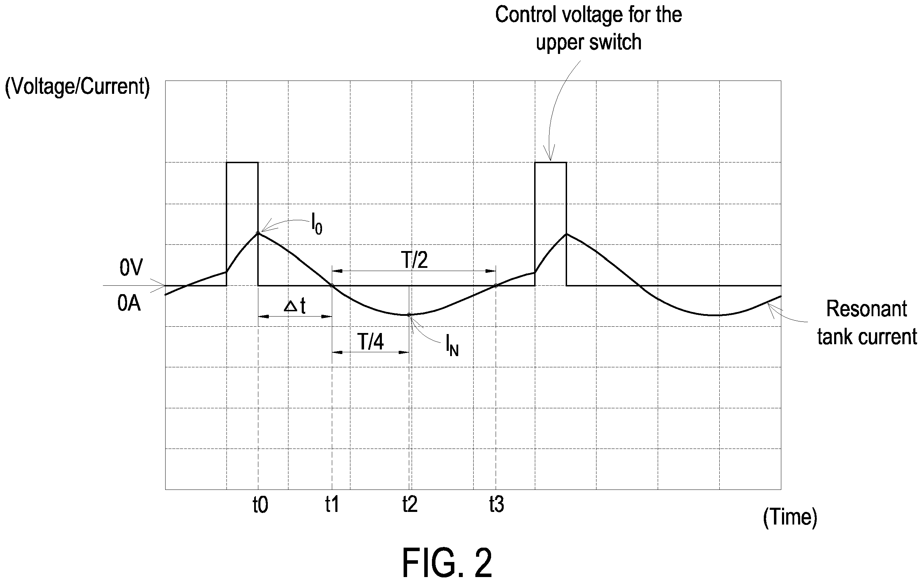

Please refer to FIGS. 1A, 1B and 2. FIG. 1A is a schematic functional block diagram illustrating the architecture of a heating device according to an embodiment of the present invention. FIG. 1B is schematic circuit diagram illustrating the heating device as shown in FIG. 1A. FIG. 2 is a schematic timing waveform diagram illustrating the control voltage for controlling the upper switch and the resonant tank current in the heating device of FIG. 1B. Preferably but not exclusively, the heating device 1 is an induction cooking stove. The heating device 1 includes a power supply circuit 2, a detection unit 3 and a control unit 4.

The power supply circuit 2 includes a resonant circuit 22. The resonant circuit 22 includes an inverter circuit 20 and a resonant tank 21. The inverter circuit 20 receives an input voltage $V_{in}$. The inverter circuit 20 includes at least one switch. For example, as shown in FIG. 1B, the inverter circuit 20 includes an upper switch $Q_h$ and a lower switch Qi. The upper switch $Q_h$ and the lower switch Qi are connected with each other in series. Consequently, the inverter circuit 20 is formed as a half-bridge inverter circuit. By alternately turning on and turning off the upper switch $Q_h$ and the lower switch Qi, the input voltage $V_{in}$ is converted by the inverter circuit 20. Consequently, a resonant tank current $I_r$ and a resonant tank voltage $V_r$ are outputted from the inverter circuit 20. Moreover, each of the upper switch $Q_h$ and the lower switch Qi includes a control terminal, a first conducting terminal and a second conducting terminal.

The resonant tank 21 includes a first terminal Ti, a second terminal Tz, a heating coil 210, a resonant tank capacitor $C_r$, a resonant tank equivalent inductor $L_{eq}$ and a resonant tank equivalent impedance $R_{eq}$. The first terminal

$T_1$ and the second terminal $T_2$ of the resonant tank 21 are electrically coupled with the two conducting terminals of one of the two switches of the inverter circuit 20. As shown in FIG. 1B, the first terminal $T_1$ of the resonant tank 21 is electrically coupled with the first conducting terminal of the lower switch Qi, and the second terminal $T_2$ of the resonant tank 21 is electrically coupled with the second conducting terminal of the lower switch Qi. The resonant tank capacitor $C_r$, the resonant tank equivalent inductor $L_{eq}$ and the resonant tank equivalent impedance $R_{eq}$ are serially connected between the first terminal $T_1$ and the second terminal $T_2$ in sequence. It is noted that the connection sequence of the resonant tank capacitor $C_r$, the resonant tank equivalent inductor $L_{eq}$ and the resonant tank equivalent impedance $R_{eq}$ between the first terminal $T_1$ and the second terminal $T_2$ is not restricted and is varied according to the practical requirements. The foodstuff container (not shown) on the heating device 1 is heated by heating coil 210 through induction according to the resonant tank current $I_r$ and the resonant tank voltage $V_r$ from the inverter current 20. Moreover, the resonant tank 21, the heating coil 210 and the foodstuff container are collaboratively equivalent to the resonant tank equivalent inductor $L_{eq}$, and the resonant tank 21, the heating coil 210 and the foodstuff container are also equivalent to the resonant tank equivalent impedance $R_{eq}$. In addition, the capacitance of the resonant tank capacitor $C_r$ is a known value.

As mentioned above, the inductance of the resonant tank equivalent inductor $L_{eq}$ is related with the inductance of the heating coil 210, the material of the foodstuff container and the location of the foodstuff container on the heating device 1. In other words, when any one of the inductance of the heating coil 210, the material of the foodstuff container and the location of the foodstuff container on the heating device 1 is changed, the inductance of the resonant tank equivalent inductor $L_{eq}$ is correspondingly changed. Similarly, the impedance value of the resonant tank equivalent impedance $R_{eq}$ is related with the impedance value of the heating coil 210, the material of the foodstuff container and the location of the foodstuff container on the heating device 1. In other words, when any one of the impedance value of the heating coil 210, the material of the foodstuff container and the location of the foodstuff on the heating device 1 is changed, the impedance value of the resonant tank equivalent impedance $R_{eq}$ is changed.

The control unit 4 is electrically coupled with the inverter circuit 20. The control unit 4 controls the inverter circuit 20 to output the resonant tank current $I_r$ and the resonant tank voltage $V_r$ to the resonant tank 21. Consequently, the heating power of the heating coil 210 is controlled.

The detection unit 3 is electrically coupled with the resonant circuit 22. For example, the detection unit 3 is electrically coupled between the first terminal $T_1$ of the resonant tank 21 and the resonant tank capacitor $C_r$. Moreover, the detection unit 3 detects the resonant tank current $I_r$ and the resonant tank voltage $V_r$ to acquire the information about a reference current value $I_0$, a time difference $\Delta t$, a first zero-crossing time point, a second zero-crossing time point, a resonant period T and a negative peak current value $I_N$. The reference current value $I_0$ is a current value of the resonant tank current Ir when the resonant tank voltage $V_r$ is zero. For example, when the upper switch $Q_h$ of the inverter circuit 20 is operated in the negative half cycle and switched from the conducting state to the non-conducting state and the resonant tank voltage $V_r$ is zero (e.g., at the time point t0), the instantaneous current value of the resonant tank current $I_r$ is served as the reference current value $I_0$. The first zero-crossing time point is the time point corresponding to the first zero value of the resonant tank current $I_r$ after the resonant tank voltage $V_r$ is zero (e.g., at the time point t1). The second zero-crossing time point is the time point corresponding to the second zero value of the resonant tank current $I_r$ after the resonant tank voltage $V_r$ is zero (e.g., at the time point t3). The time difference $\Delta t$ is a time length between the time point t0 (i.e., the time point when the resonant tank voltage $V_r$ is zero) and the time point t1 (i.e., the first zero-crossing time point). The resonant period T is defined by the first zero-crossing time point and the second zero-crossing time point. The negative peak current value $I_N$ is the maximum value of the resonant tank curient $I_r$ when the resonant tank current $I_r$ is negative (i.e., at the time point t2).

In an embodiment, the detection unit 3 calculates the inductance of the resonant tank equivalent inductor $L_{eq}$ according to the capacitance of the resonant tank capacitor $C_r$, a first expression and the resonant period T. The first expression is expressed as the following mathematic formula (1):

$$L_{eq} = \left(\frac{T}{2\pi\sqrt{C_r}}\right)^2, \qquad \text{---(1)};$$

In the above mathematic formula, $L_{eq}$ is the inductance of the resonant tank equivalent inductor, $C_r$ is the capacitance of the resonant tank capacitor, and T is the resonant period.

Moreover, the detection unit 3 calculates the impedance value of the resonant tank equivalent impedance $R_{eq}$ according to the inductance of the resonant tank equivalent inductor $L_{eq}$, the time difference $\Delta t$, the resonant period T, the reference current value $I_0$, the negative peak current value $I_N$ of the resonant tank current $I_r$ and a second expression. The second expression is expressed as the following mathematic formula (2):

$$R_{eq} = \frac{2L_{eq}}{\Delta t + \frac{T}{4}} \ln\left(\frac{-I_0}{I_N} \frac{1}{\sin(\frac{\Delta t}{T} 2\pi)}\right) \quad ---(2)\;$$

In the above mathematic formula, $R_{eq}$ is the impedance value of the resonant tank equivalent impedance, $I_0$ is the reference current value, $\Delta t$ is the time difference, and $I_N$ is the negative peak current value of the resonant tank current.

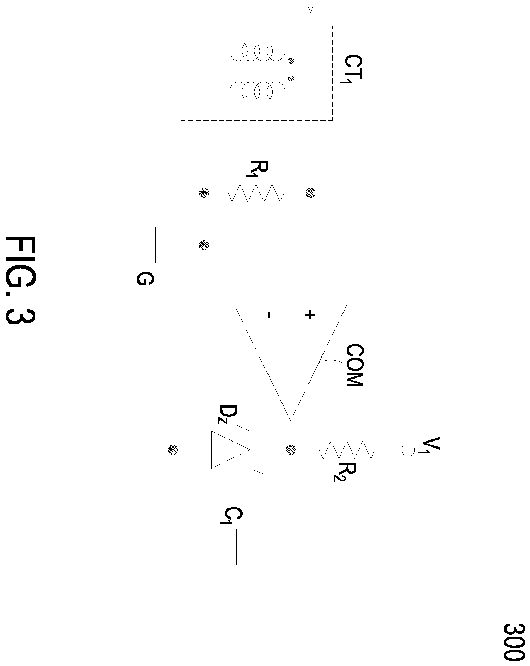

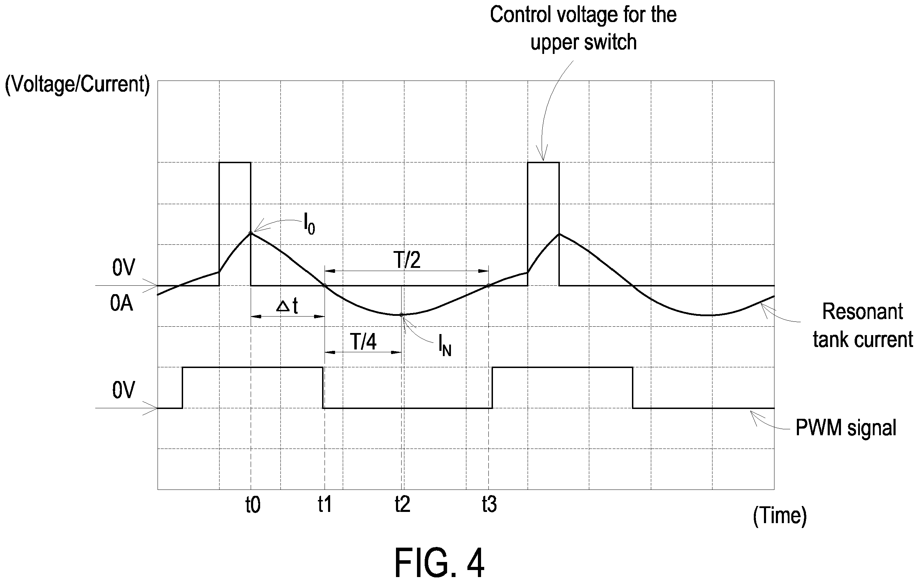

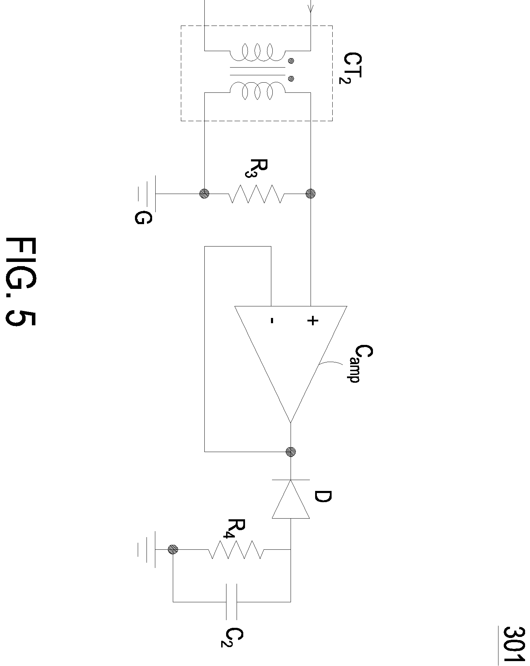

FIG. 3 is a schematic circuit diagram illustrating the zero-crossing detection circuit in the parameter acquisition unit of the detection unit as shown in FIG. 1B. FIG. 4 is a schematic timing waveform diagram illustrating the control voltage for controlling the upper switch, the resonant tank current and the PWM signal from the zero-crossing detection circuit. FIG. 5 is a schematic circuit diagram illustrating the negative peak value detection circuit in the parameter acquisition unit of the detection unit as shown in FIG. 1B.

Please refer to FIGS. 1B, 3, 4, 5. The detection unit 3 includes a parameter acquisition unit 30 and a microprocessor 31. The parameter acquisition unit 30 is electrically coupled with the resonant circuit 22. For example, the parameter acquisition unit 30 is electrically coupled with the first terminal $T_1$ of the resonant tank 21 and the resonant tank capacitor $C_r$. The parameter acquisition unit 30 detects the resonant tank current Ir and the resonant tank voltage $V_r$. When the inverter circuit 20 is operated in the negative half cycle and the resonant tank voltage $V_r$ is zero (e.g., when the upper switch $Q_h$ of the inverter circuit 20 is operated in the negative half cycle and switched from the conducting state to the non-conducting state), the parameter acquisition unit 30 acquires the information about the resonant period T of the resonant tank 21 and the negative peak current value $I_N$ of the resonant tank current $I_r$ according to the resonant tank current Ir and the resonant tank voltage $V_r$.

The parameter acquisition unit 30 can be implemented with a hardware component or a software component. In the embodiment of FIG. 1B, the parameter acquisition unit 30 is implemented with the hardware component. In addition, the parameter acquisition unit 30 includes a zero-crossing detection circuit 300 and a negative peak value detection circuit 301.

The zero-crossing detection circuit 300 is electrically coupled with the resonant tank 21. For example, the zero-crossing detection circuit 300 is electrically coupled between the first terminal $T_1$ and the resonant tank capacitor $C_r$. The zero-crossing detection circuit 300 detects the resonant tank current $I_r$ and the resonant tank voltage $V_r$. In addition, the zero-crossing detection circuit 300 acquires information about the resonant period T according to the resonant tank current $I_r$ and the resonant tank voltage $V_r$. In an embodiment, the zero-crossing detection circuit 300 includes a first current transformer CTi, a first resistor $R_1$, a comparator COM, a second resistor $R_2$, a first capacitor Ci and a Zener diode $D_z$. The input terminal of the first current transformer $CT_1$ is electrically coupled with the resonant tank 21. For example, the first current transformer $CT_1$ is electrically coupled between the first terminal $T_1$ and the resonant tank capacitor $C_r$ to acquire the resonant tank current $I_r$. The first terminal and the second terminal of the first resistor $R_1$ are electrically coupled with the output terminal of the first current transformer $CT_1$. Moreover, the second terminal of the first resistor $R_1$ is also electrically coupled with the ground terminal G. The positive input terminal of the comparator COM and the first terminal of the first resistor $R_1$ are electrically coupled with the output terminal of the first current transformer $CT_1$. The negative input terminal of the comparator COM and the second terminal of the first resistor $R_1$ are electrically coupled with the ground terminal G. The second resistor $R_2$ is electrically coupled between a voltage source $V_1$ and the output terminal of the comparator COM. The anode of the Zener diode $D_z$ is electrically coupled with the ground terminal G. The cathode of the Zener diode $D_z$ is electrically coupled with the output terminal of the comparator COM. The first capacitor Ci is electrically coupled between the output terminal of the comparator COM and the ground terminal G. Moreover, the first capacitor Ci and the Zener diode $D_z$ are electrically coupled with each other in parallel.

Due to the hardware structure of the zero-crossing detection circuit 300, a pulse width modulation (PWM) signal is outputted from the output terminal of the comparator COM. Whenever the resonant tank current $I_r$ is zero (i.e., at the time point corresponding to the zero-crossing point), the PWM signal is switched from the high level state to the low level state or switched from the low level state to the high level state at the time point corresponding to the zero-crossing point of the resonant tank current $I_r$. After the upper switch $Q_h$ of the inverter circuit 20 switched from the conducting state to the non-conducting state and the resonant tank voltage $V_r$ is zero, the time interval of the PWM signal outputted by the comparator COM form the first level switching (corresponding to the first zero-crossing time point) to the second level switching (corresponding to the second zero-crossing time point) is substantially equal to a half of the resonant period T. In other words, the resonant period T is equal to twice the time interval between the first zero-crossing time point and the second zero-crossing time point. The resonant period T is defined by the resonant tank current $I_r$ and the resonant tank voltage $V_r$, and the zero-crossing detection circuit 300 acquires information about the resonant period T according to the resonant tank current $I_r$ and the resonant tank voltage $V_r$.

The negative peak value detection circuit 301 is electrically coupled with the resonant tank 21. For example, the negative peak value detection circuit 301 is electrically coupled between the first terminal $T_1$ and the resonant tank capacitor $C_r$. The negative peak value detection circuit 301 detects the resonant tank current $I_r$ and the resonant tank

6

voltage $V_r$. Moreover, the negative peak value detection circuit 301 acquires the information about the negative peak current value $I_N$ of the resonant tank current Ir according to the resonant tank current Ir. In an embodiment, the negative peak value detection circuit 301 includes a second current transformer $CT_2$, a third resistor $R_3$, a fourth resistor $R_4$, a negative feedback amplifier $C_{amp}$, a diode D and a second capacitor $C_2$. The input terminal of the second current transformer $CT_2$ is electrically coupled with the resonant tank 21. For example, the second current transformer $CT_2$ is electrically coupled between the first terminal $T_1$ and the resonant tank capacitor $C_r$ to acquire the resonant tank current $I_r$. The first terminal and the second terminal of the third resistor $R_3$ are electrically coupled with the output terminal of the second current transformer $CT_2$. The second terminal of the third resistor $R_3$ is electrically coupled with the ground terminal G. The non-inverting terminal of the negative feedback amplifier Camp is electrically coupled with the first terminal of the third resistor $R_3$ and the output terminal of the second current transformer $CT_2$. The inverting terminal of the negative feedback amplifier Camp is electrically coupled with the output terminal of the negative feedback amplifier $C_{amp}$. The cathode of the diode D is electrically coupled with the output terminal of the negative feedback amplifier $C_{amp}$. The fourth resistor $R_4$ is electrically coupled between the anode of the diode D and the ground terminal G. The second capacitor $C_2$ is electrically coupled between the anode of the diode D and the ground terminal G. In addition, with the second capacitor $C_2$ and the fourth resistor $R_4$ are electrically coupled with each other in parallel. Due to the above circuitry structure of the negative peak value detection circuit 301, the negative peak value detection circuit 301 acquires the information about negative peak current value $I_N$ of the resonant tank current $I_r$ according to the resonant tank current $I_r$ and the resonant tank voltage $V_r$.

In case that the parameter acquisition unit 30 is implemented with a software component, an algorithm, a calculation formula and/or a parameter relationship table can be previously stored in the parameter acquisition unit 30. In the cooperation of the algorithm, the calculation formula and/or the parameter relationship table, the negative peak value detection circuit 301 acquires the information about negative peak current value $I_N$ of the resonant tank current $I_r$ according to the resonant tank current $I_r$ and the resonant tank voltage $V_r$.

Preferably but not exclusively, the microprocessor 31 is a digital signal processor (DSP) or a microcontroller unit (MCU). The microprocessor 31 is electrically coupled with the parameter acquisition unit 30. In an embodiment, the microprocessor 31 includes a first calculation unit 310 and a second calculation unit 311.

A first expression is previously stored in the first calculation unit 310. The first calculation unit 310 acquires the parameter information about the resonant period T from the parameter acquisition unit 30. The first calculation unit 310 calculates the inductance of the resonant tank equivalent inductor $L_{eq}$ according to the capacitance of the resonant tank capacitor $C_r$, the first expression and the received resonant period T. In addition, the first calculation unit 310 provides a first calculation result about the inductance of the resonant tank equivalent inductor $L_{eq}$.

A second expression is previously stored in the second calculation unit 311. The second calculation unit 311 acquires the first calculation result about the inductance of the resonant tank equivalent inductor $L_{eq}$ from the first calculation unit 310. The second calculation unit 311 acquires information about the reference current value $I_0$, the time difference $\Delta t$ and the negative peak current value $I_N$ of the resonant tank current $I_r$ according to the resonant tank current $I_r$ and the resonant tank voltage $V_r$. The second calculation unit 311 calculates the impedance value of the resonant tank equivalent impedance $R_{eq}$ according to the inductance of the resonant tank equivalent inductor $L_{eq}$, the reference current value $I_0$, the time difference $\Delta t$, the negative peak current value $I_N$ of the resonant tank current $I_r$ and the second expression. In addition, the second calculation unit 311 provides a second calculation result about the impedance value of the resonant tank equivalent impedance $R_{eq}$.

In an embodiment, the control unit 4 acquires the resonant tank equivalent inductor $L_{eq}$ and the resonant tank equivalent impedance $R_{eq}$ according to the first calculation result and the second calculation results from the microprocessor 31. Furthermore, the control unit 4 performs various control operations on the resonant circuit 22 according to the resonant tank equivalent inductor $L_{eq}$ and the resonant tank equivalent impedance $R_{eq}$. For example, the control unit 4 can determine whether the heating coil 210 is enabled or disabled and determine whether the foodstuff container is placed on the heating device 1 according to the resonant tank equivalent inductor $L_{eq}$ and the resonant tank equivalent impedance $R_{eq}$. Moreover, the control unit 4 determines the burden ratio of the heating coil 210 according to the inductance of the resonant tank equivalent inductor $L_{eq}$ and the impedance value of the resonant tank equivalent impedance $R_{eq}$. Moreover, the output power from the heating device 1 is corrected by the control unit 4 in real time according to the change of the inductance of the resonant tank equivalent inductor $L_{eq}$ and the change of the impedance value of the resonant tank equivalent impedance $R_{eq}$. Moreover, the control unit 4 can recognize the material of the foodstuff container according to the inductance of the resonant tank equivalent inductor $L_{eq}$ and the impedance value of the resonant tank equivalent impedance $R_{eq}$.

Hereinafter, the first expression (1) and the second expression (2) will be roughly derived with reference to FIGS. 1A, 1B, 2 and 3.

The main working principle of the present invention is based on the natural response characteristics of the resonant tank 21. After the time point t=t0, the natural response of the resonant tank 21 occurs. Consequently, the general formula of the resonant tank current $I_r$ can be expressed as the following mathematic formula (3):

$$i_r(t) = e^{-\alpha t}(B_1 \cos \omega_d t + B_2 \sin \omega_d t)$$

$$---(3);$$

In the above mathematic formula, $i_r(t)$ is the resonant tank current $I_r$ as a function of time, $\alpha$ is an attenuation coefficient, $\omega_d$ is a damping resonance frequency, and $B_1$ and $B_2$ are arbitrary constants determined by the boundary conditions. Since the heating device 1 is an induction cooking stove, $\omega_0^2 \gg \alpha^2$. Under this circumstance, the resonant tank 21 is operated in an underdamped zone. The damping resonance frequency can be simplified as:

$$\omega_d = \sqrt{\omega_0^2 - \alpha^2} \cong \omega_0$$ , where $\omega_0$ is a natural resonance frequency. Through the angle sum and difference identities, the mathematic formula (3) can be rearranged as the mathematic formula (4):

$$i_r(t) = I_P e^{-\alpha t} \sin(\omega_0 t + \theta) \quad ---(4);$$

In the above mathematic formula, $I_p$ is the current peak value when the resonant tank 21 is in the natural resonance state, and $\theta$ is the angle.
In the mathematic formula (4), some parameters may be expressed as the following general formulae:

$$\omega_0 = \frac{1}{\sqrt{L_{eq}C_r}} \quad ---(5) \; ;$$

$$\alpha = \frac{R_{eq}}{2L_{eq}} \quad ---(6) \; ;$$

Consequently, the mathematic formula (1) may be derived from the mathematic formula (5). In addition, the relationship between the resonance frequency $f_0$ and the resonant period T may be expressed as the following mathematic formula:

$$f_0 = \frac{1}{T} = \frac{\omega_0}{2\pi} \quad ---(7) \; ;$$

Generally, in case that the duty cycle of the upper switch $Q_h$ is smaller, the discharge waveform of the resonant tank 21 in the negative half cycle is relatively complete. Under this circumstance, the zero-crossing detection circuit 300 can be used to obtain the half resonant period T/2. After the half resonant period T/2 is introduced into the mathematic formula (1) according to the mathematic formula (7), the first calculation unit 310 acquires the inductance of the resonant tank equivalent inductor Leq.
Moreover, the magnitude of the resonant tank current $I_r$ is zero at $\sin 0°$ and $\sin \pi$. Consequently, the zero-crossing point of the resonant tank current $I_r$ is taken as the reference point, the calculation is carried out in the form of the relative angle. Please refer to FIG. 2 again. For example, when the upper switch $Q_h$ is switched from the conducting state to the non-conducting state and the resonant tank voltage $V_r$ is zero (e.g., at the time point t0), the instantaneous current value of the resonant tank current $I_r$ is served as the reference current value $I_0$. That is, at the time point t0, the upper switch $Q_h$ is turned off, and the lower switch Qi is turned on. The first zero-crossing time point is the time point corresponding to the first zero value of the resonant tank current $I_r$ after the upper switch $Q_h$ is switched from the conducting state to the non-conducting state (e.g., at the time point 11). The time point t1 corresponds to the angle $\pi$. The negative peak current value $I_N$ is the maximum value of the resonant tank current $I_r$ (i.e., at the time point t2). The time point t2 corresponds to the angle $3\pi/2$. According to the mathematic formula (4), the relationship between the current peak value $I_p$, the reference current value $I_0$, the negative peak current value $I_N$ and the angle $\theta$ may be expressed as the mathematic formulae (8) and (9):

$$I_0 = I_P \sin\theta \quad \text{---} (8);$$

$$I_N = I_P e^{-\alpha t_1} \sin(\omega_0 t_1 + \theta) = -I_P e^{-\alpha t_1} \quad \text{----} (9);$$

As shown in FIG. 2, after the upper switch $Q_h$ is switched from the conducting state to the non-conducting state, the sampling time point of the reference current value $I_0$ is obtained at the time point when the time difference $\Delta t$ is subtracted from the first zero-crossing time point of the resonant tank current $I_r$. Moreover, the negative peak current value $I_N$ of the resonant tank current $I_r$ occurs at the time point t2 (i.e., the time point corresponding to the angle $3\pi/2$). Consequently, the following mathematic formulae (10), (11) and (12) can be obtained.

$$\sin\theta = \sin\left(\pi - \frac{\Delta t}{T} 2\pi\right) = \sin\left(\frac{\Delta t}{T} 2\pi\right) \quad \text{---} (10);$$

$$\sin(\omega_0 t_1 + \theta) = \sin\frac{3\pi}{2} = -1 \quad \text{---} (11);$$

$$t_1 = \Delta t + \frac{T}{4} \quad \text{---} (12);$$

The mathematic formula (2) can be derived from the mathematic formulae (8), (9), (10), (11) and (12).

In an embodiment, the detection unit 3 is implemented with a controller.

In the above embodiment, the inverter circuit 20 includes the upper switch $Q_h$ and the lower switch Qi. It is noted that numerous modifications and alterations may be made while retaining the teachings of the invention. In some other embodiments, the inverter circuit 20 includes a single switch or at least four switches. In case that the inverter circuit 20 includes a single switch, the first terminal $T_1$ and the second terminal $T_2$ of the resonant tank 21 are electrically connected with the first conducting terminal and the second conducting terminal of the switch. In case that the inverter circuit 20 includes four switches and the inverter circuit 20 is formed as a full-bridge inverter circuit, the first terminal $T_1$ and the second terminal $T_2$ of the resonant tank 21 are electrically coupled with the first conducting terminal and the second conducting terminal of the lower switch of one of the two bridge arms of the inverter circuit 20. In case that the inverter circuit 20 includes a single switch or at least four switches, the operations of the heating device are similar to the those of the heating device 1, and not redundantly described herein.

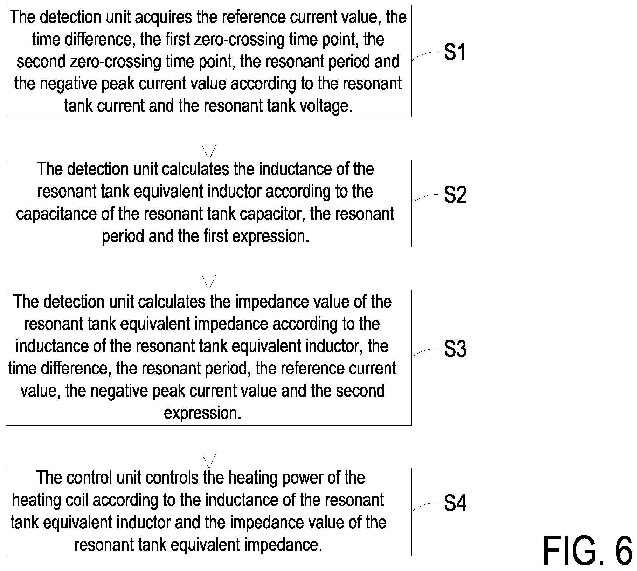

Please refer to FIG. 6. FIG. 6 is a flowchart illustrating a detecting method for a heating device according to an embodiment of the present invention. The detecting method is applied to the detection unit 13 of the heating device 1 as shown in FIG. 1B. The detecting method includes the following steps.

In a step S1, the detection unit 3 acquires the reference current value $I_0$, the time difference $\Delta t$, the first zero-crossing time point, the second zero-crossing time point, the resonant period T and the negative peak current value $I_N$ according to the resonant tank current $I_r$ and the resonant tank voltage $V_r$.

In a step S2, the detection unit 3 calculates the inductance of the resonant tank equivalent inductor $L_{eq}$ according to the capacitance of the resonant tank capacitor $C_r$, the resonant period T and the first expression.

In a step S3, the detection unit 3 calculates the impedance value of the resonant tank equivalent impedance $R_{eq}$ according to the inductance of the resonant tank equivalent inductor $L_{eq}$, the time difference $\Delta t$, the resonant period T, the reference current value $I_0$, the negative peak current value $I_N$ and the second expression.

In a step S4, the control unit 4 controls the heating power of the heating coil 210 according to the inductance of the resonant tank equivalent inductor $L_{eq}$ and the impedance value of the resonant tank equivalent impedance $R_{eq}$.

Furthermore, in the step S4, the control unit 4 performs various control operations on the resonant circuit 22. For example, the control unit 4 determines whether the foodstuff container is placed on the heating device 1 according to inductance of the resonant tank equivalent inductor $L_{eq}$ and the impedance value the resonant tank equivalent impedance $R_{eq}$. Moreover, the control unit 4 determines the burden ratio of the heating coil 210 according to the inductance of the resonant tank equivalent inductor $L_{eq}$ and the impedance value of the resonant tank equivalent impedance $R_{eq}$. Moreover, the control unit 4 recognizes the material of the foodstuff container on the heating device 1 according to the inductance of the resonant tank equivalent inductor $L_{eq}$ and the impedance value of the resonant tank equivalent impedance $R_{eq}$.

From the above descriptions, the present invention provides the heating device and the detecting method for the heating device. The heating device includes the resonant tank. The heating device includes the resonant tank. The main working principle of the present invention is based on the natural response characteristics of the resonant tank in the negative half cycle. The inductance of the resonant tank equivalent inductor and the impedance value of the resonant tank equivalent impedance are calculated according to the current information of the resonant tank, the first expression and the second expression. When compared with the conventional heating device, the heating device of the present invention needs to equip less detection circuits. Consequently, the heating device is simplified and the cost is reduced.

**Claims**

1. A heating device (1), comprising:

   a resonant circuit (22) comprising:

      an inverter circuit (20) configured to provide a resonant tank current ($I_r$) and a resonant tank voltage ($V_r$); and
      a resonant tank (21) comprising a heating coil (210), a resonant tank capacitor (Cr), a resonant tank equivalent inductor ($L_{eq}$) and a resonant tank equivalent impedance ($R_{eq}$);

   a detection unit (3) electrically coupled with the resonant circuit (22), wherein the detection unit (3) detects the resonant tank current ($I_r$) and the resonant tank voltage ($V_r$) to acquire a reference current value ($I_0$), a first zero-crossing time point, a second zero-crossing time point, a time difference ($\Delta t$), a resonant period (T) and a negative peak current value ($I_N$), wherein the reference current value ($I_0$) is a current value of the resonant tank current ($I_r$) when the resonant tank voltage ($V_r$) is zero, the time difference ($\Delta t$) is a time length between a time point when the resonant tank voltage ($V_r$) is zero and the first zero-crossing time point, and the resonant period (T) is defined according to the first zero-crossing time point and the second zero-crossing time point, wherein the first zero-crossing time point is a first time point corresponding to a first zero value of the resonant tank current ($I_r$) after the resonant tank voltage ($V_r$) is zero, and the second zero-crossing time point is a second time point corresponding to a second zero value of the resonant tank current ($I_r$) after the resonant tank voltage ($V_r$) is zero; and
   a control unit (4) configured to control the inverter circuit (20) to output the resonant tank current ($I_r$) and the resonant tank voltage ($V_r$), so that a heating power of the heating coil (210) is adjustable,
   wherein the detection unit (3) calculates an inductance of the resonant tank equivalent inductor ($L_{eq}$) according to a capacitance of the resonant tank capacitor (Cr), the resonant period (T) and a first expression, the detection unit (3) calculates an impedance value of the resonant tank equivalent impedance ($R_{eq}$) according to the inductance of the resonant tank equivalent inductor ($L_{eq}$), the time difference ($\Delta t$), the resonant period (T), the reference current value ($I_0$), the negative peak current value ($I_N$) and a second expression, and the control unit (4) controls the heating power of the heating coil (210) according to the inductance of the resonant tank equivalent inductor ($L_{eq}$) and the impedance value of the resonant tank equivalent impedance ($R_{eq}$),
   wherein $L_{eq}$ is the inductance of the resonant tank equivalent inductor ($L_{eq}$), $C_r$ is the capacitance of the resonant tank capacitor (Cr), and T is the resonant period (T), and the first expression is expressed as a following mathematic formula:

$$L_{eq} = \left(\frac{T}{2\pi\sqrt{C_r}}\right)^2,$$

   wherein $R_{eq}$ is the impedance value of the resonant tank equivalent impedance ($R_{eq}$), $I_0$ is the reference current value ($I_0$), $\Delta t$ is the time difference ($\Delta t$), and $I_N$ is the negative peak current value of the resonant tank current ($I_r$), and the second expression is expressed as a following mathematic formula:

$$R_{eq} = \frac{2L_{eq}}{\Delta t+\frac{T}{4}}\ln\left(\frac{-I_0}{I_N}\frac{1}{\sin(\frac{\Delta t}{T}2\pi)}\right).$$

2. The heating device (1) according to claim 1, wherein the detection unit (3) comprises a parameter acquisition unit (30), and the parameter acquisition unit (30) is electrically coupled with the resonant tank (22) to detect the resonant

tank current ($I_r$) and the resonant tank voltage ($V_r$), wherein when the resonant tank voltage ($V_r$) is zero, the parameter acquisition unit (30) acquires the resonant period (T) and the negative peak current value ($I_N$) of the resonant tank current ($I_r$) according to the resonant tank current ($I_r$) and the resonant tank voltage ($V_r$).

3.  The heating device (1) according to claim 2, wherein the parameter acquisition unit (30) comprises:

    a zero-crossing detection circuit (300) electrically coupled with the resonant tank (21), wherein the zero-crossing detection circuit (300) detects the resonant tank current ($I_r$) and the resonant tank voltage ($V_r$), and the zero-crossing detection circuit (300) acquires the resonant period (T) according to the resonant tank current ($I_r$) and the resonant tank voltage ($V_r$); and
    a negative peak value detection circuit (301) electrically coupled with the resonant tank (21), wherein the negative peak value detection circuit (301) detects the resonant tank current ($I_r$) and the resonant tank voltage ($V_r$), and the negative peak value detection circuit (301) acquires the negative peak current value ($I_N$) according to the resonant tank current ($I_r$) and the resonant tank voltage ($V_r$).

4.  The heating device (1) according to claim 3, wherein the zero-crossing detection circuit (300) comprises:

    a first current transformer ($CT_1$), wherein an input terminal of the first current transformer ($CT_1$) is electrically coupled with the resonant tank (21) to receive the resonant tank current ($I_r$);
    a first resistor ($R_1$), wherein a first terminal and a second terminal of the first resistor ($R_1$) are electrically coupled with an output terminal of the first current transformer ($CT_1$), and the second terminal of the first resistor ($R_1$) is electrically coupled with a ground terminal (G);
    a comparator (COM), wherein a positive input terminal of the comparator (COM) is electrically coupled with the first terminal of the first resistor ($R_1$) and the output terminal of the first current transformer ($CT_1$), and a negative input terminal of the comparator (COM) is electrically coupled with the second terminal of the first resistor ($R_1$) and the ground terminal (G);
    a second resistor ($R_2$) electrically coupled between a voltage source ($V_1$) and an output terminal of the comparator (COM);
    a Zener diode ($D_z$), wherein an anode of the Zener diode ($D_z$) is electrically coupled with the ground terminal (G), and a cathode of the Zener diode ($D_z$) is electrically coupled with the output terminal of the comparator (COM); and
    a first capacitor ($C_1$) electrically coupled between the output terminal of the comparator (COM) and the ground terminal (G), wherein the first capacitor ($C_1$) and the Zener diode ($D_z$) are electrically coupled with each other in parallel.

5.  The heating device (1) according to claim 3, wherein the negative peak value detection circuit (301) comprises:

    a second current transformer ($CT_2$), wherein an input terminal of the second current transformer ($CT_2$) is electrically coupled with the resonant tank (21) to receive the resonant tank current ($I_r$);
    a third resistor ($R_3$), wherein a first terminal and a second terminal of the third resistor ($R_3$) are electrically coupled with an output terminal of the second current transformer ($CT_2$), and the second terminal of the third resistor ($R_3$) is electrically coupled with a ground terminal (G);
    a negative feedback amplifier (Camp), wherein a non-inverting terminal of the negative feedback amplifier (Camp) is electrically coupled with a first terminal of the third resistor ($R_3$) and the output terminal of the second current transformer ($CT_2$), and an inverting terminal of the negative feedback amplifier (Camp) is electrically coupled with an output terminal of the negative feedback amplifier (Camp);
    a diode (D), wherein a cathode of the diode (D) is electrically coupled with the output terminal of the negative feedback amplifier (Camp);
    a fourth resistor ($R_4$) electrically coupled between an anode of the diode (D) and the ground terminal (G); and
    a second capacitor ($C_2$) electrically coupled between the anode of the diode (D) and the ground terminal (G), wherein the second capacitor ($C_2$) and the fourth resistor ($R_4$) are electrically coupled with each other in parallel.

6.  The heating device (1) according to claim 4, wherein the detection unit (3) further comprises a microprocessor (31), and the microprocessor (31) comprises:

    a first calculation unit (310), wherein the first expression is previously stored in the first calculation unit (310), and the first calculation unit (310) calculates the inductance of the resonant tank equivalent inductor ($L_{eq}$) according to the capacitance of the resonant tank capacitor ($C_r$), the resonant period (T) provided by the zero-crossing detection circuit (300) and the first expression, and the first calculation unit (310) provides a first calculation result to the control unit (4); and

a second calculation unit (311), wherein the second expression is previously stored in the second calculation unit (311), wherein the second calculation unit (311) acquires the first calculation result from the first calculation unit (310), the second calculation unit (311) acquires the reference current value ($I_0$), the time difference ($\Delta t$) and the negative peak current value $I_N$ of the resonant tank current ($I_r$) according to the resonant tank current ($I_r$) and the resonant tank voltage ($V_r$), the second calculation unit (311) calculates the impedance value of the resonant tank equivalent impedance ($R_{eq}$) according to the inductance of the resonant tank equivalent inductor ($L_{eq}$), the time difference ($\Delta t$), the resonant period (T), the reference current value ($I_0$), the negative peak current value ($I_N$) of the resonant tank current ($I_r$) and the second expression, and the second calculation unit (311) provides a second calculation result to the control unit (4).

7. The heating device (1) according to claim 6, wherein the microprocessor (31) is a digital signal processor or a microcontroller unit.

8. The heating device (1) according to claim 1, wherein the heating device (1) is an induction cooking stove.

9. The heating device (1) according to claim 1, wherein the inverter circuit (20) comprises an upper switch ($Q_h$) and a lower switch ($Q_l$), which are connected with each other, wherein the upper switch ($Q_h$) and the lower switch ($Q_l$) are alternately turned on and turned off, and a first terminal and a second terminal of the resonant tank (21) are electrically coupled with two conducting terminals of the lower switch ($Q_h$), respectively.

10. A detecting method for a detection unit (3) of a heating device (1), the heating device (1) further comprising a resonant circuit (22), the resonant circuit (22) comprising an inverter circuit (20) and a resonant tank (21), the inverter circuit (20) providing a resonant tank current ($I_r$) and a resonant tank voltage ($V_r$), the resonant tank (21) comprising a heating coil (210), a resonant tank capacitor ($C_r$), a resonant tank equivalent inductor ($L_{eq}$) and a resonant tank equivalent impedance ($R_{eq}$), wherein the detecting method comprises steps of:

(a) (S1) detecting the resonant tank current ($I_r$) and the resonant tank voltage ($V_r$) to acquire a reference current value ($I_0$), a first zero-crossing time point, a second zero-crossing time point, a time difference ($\Delta t$), a resonant period (T) and a negative peak current value ($I_N$), wherein the reference current value ($I_0$) is a current value of the resonant tank current ($I_r$) when the resonant tank voltage ($V_r$) is zero, the time difference ($\Delta t$) is a time length between a time point when the resonant tank voltage ($V_r$) is zero and the first zero-crossing time point, and the resonant period (T) is defined according to the first zero-crossing time point and the second zero-crossing time point, wherein the first zero-crossing time point is a first time point corresponding to a first zero value of the resonant tank current ($I_r$) after the resonant tank voltage ($V_r$) is zero, and the second zero-crossing time point is a second time point corresponding to a second zero value of the resonant tank current ($I_r$) after the resonant tank voltage ($V_r$) is zero;

(b) (S2) calculating an inductance of the resonant tank equivalent inductor ($L_{eq}$) according to a capacitance of the resonant tank capacitor ($C_r$), the resonant period (T) and a first expression, wherein the first expression is expressed as a following mathematic formula:

$$ L_{eq} = \left(\frac{T}{2\pi\sqrt{C_r}}\right)^2 , $$

where $L_{eq}$ is the inductance of the resonant tank equivalent inductor ($L_{eq}$), $C_r$ is the capacitance of the resonant tank capacitor ($C_r$), and T is the resonant period (T);

(c) (S3) calculating an impedance value of the resonant tank equivalent impedance ($R_{eq}$) according to the inductance of the resonant tank equivalent inductor ($L_{eq}$), the time difference ($\Delta t$), the resonant period (T), the reference current value ($I_0$), the negative peak current value ($I_N$) and a second expression, wherein the second expression is expressed as a following mathematic formula:

$$ R_{eq} = \frac{2L_{eq}}{\Delta t + \frac{T}{4}} \ln\left(\frac{-I_0}{I_N} \frac{1}{\sin(\frac{\Delta t}{T}2\pi)}\right) , $$

where $R_{eq}$ is the impedance value of the resonant tank equivalent impedance ($R_{eq}$), $I_0$ is the reference current

value ($I_0$), $\Delta$t is the time difference ($\Delta$t), and $I_N$ is the negative peak current value ($I_N$) of the resonant tank current ($I_r$); and

(d) (S4) controlling a heating power of the heating coil (210) according to the inductance of the resonant tank equivalent inductor ($L_{eq}$) and the impedance value of the resonant tank equivalent impedance ($R_{eq}$).

**11.** The detecting method according to claim 10, wherein the heating device (1) is an induction cooking stove, and the step (b) further comprises a step of determining whether a foodstuff container is placed on the heating device (1) according to the inductance of the resonant tank equivalent inductor ($L_{eq}$) and the impedance value of the resonant tank equivalent impedance ($R_{eq}$).

**12.** The detecting method according to claim 10, wherein the heating device (1) is an induction cooking stove, and the step (b) further comprises a step of determining a burden ratio of the heating coil (210) according to the inductance of the resonant tank equivalent inductor ($L_{eq}$) and the impedance value of the resonant tank equivalent impedance ($R_{eq}$).

**13.** The detecting method according to claim 10, wherein the heating device (1) is an induction cooking stove, and the step (b) further comprises a step of recognizing a material of a foodstuff container on the heating device (1) according to the inductance of the resonant tank equivalent inductor ($L_{eq}$) and the impedance value of the resonant tank equivalent impedance ($R_{eq}$).

**Patentansprüche**

**1.** Heizvorrichtung (1), umfassend:

eine Resonanzschaltung (22), umfassend:

eine Inverterschaltung (20), die ausgestaltet ist, um einen Resonanzkreisstrom ($I_r$) und eine Resonanzkreisspannung ($V_r$) zur Verfügung zu stellen; und
einen Resonanzkreis (21), der eine Heizspule (210), einen Resonanzkreiskondensator (Cr), einen Resonanzkreisäquivalenzinduktor ($L_{eq}$) und eine Resonanzkreisäquivalenzimpedanz ($R_{eq}$) umfasst;

eine Detektionseinheit (3), die elektrisch mit der Resonanzschaltung (22) gekoppelt ist, wobei die Detektionseinheit (3) den Resonanzkreisstrom ($I_r$) und die Resonanzkreisspannung ($V_r$) detektiert, um einen Referenzstromwert ($I_0$), einen ersten Nulldurchgang-Zeitpunkt, einen zweiten Nulldurchgang-Zeitpunkt, eine Zeitdifferenz ($\Delta$t), eine Resonanzperiode (T) und einen negativen Spitzenstromwert ($I_N$) zu erfassen, wobei der Referenzstromwert ($I_0$) ein Stromwert des Resonanzkreisstroms ($I_r$) ist, wenn die Resonanzkreisspannung ($V_r$) Null ist, die Zeitdifferenz ($\Delta$t) eine Zeitlänge zwischen einem Zeitpunkt, wenn die Resonanzkreisspannung ($V_r$) Null ist, und dem ersten Nulldurchgang-Zeitpunkt ist, und die Resonanzperiode (T) gemäß dem ersten Nulldurchgang-Zeitpunkt und dem zweiten Nulldurchgang-Zeitpunkt definiert ist, wobei der erste Nulldurchgang-Zeitpunkt ein erster Zeitpunkt ist, der einem ersten Nullwert des Resonanzkreisstroms ($I_r$) entspricht, nachdem die Resonanzkreisspannung ($V_r$) Null ist, und der zweite Nulldurchgang-Zeitpunkt ein zweiter Zeitpunkt ist, der einem zweiten Nullwert des Resonanzkreisstroms ($I_r$) entspricht, nachdem die Resonanzkreisspannung ($V_r$) Null ist; und
eine Steuereinheit (4), die ausgestaltet ist, um die Inverterschaltung (20) zu steuern, um den Resonanzkreisstrom ($I_r$) und die Resonanzkreisspannung ($V_r$) auszugegeben, so dass eine Heizleistung der Heizspule (210) einstellbar ist,
wobei die Detektionseinheit (3) eine Induktanz des Resonanzkreisäquivalenzinduktors ($L_{eq}$) gemäß einer Kapazität des Resonanzkreiskondensators (Cr), der Resonanzperiode (T) und einem ersten Ausdruck berechnet, die Detektionseinheit (3) einen Impedanzwert der Resonanzkreisäquivalenzimpedanz ($R_{eq}$) gemäß der Induktanz des Resonanzkreisäquivalenzinduktors ($L_{eq}$), der Zeitdifferenz ($\Delta$t), der Resonanzperiode (T), dem Referenzstromwert ($I_0$), dem negativen Spitzenstromwert ($I_N$) und einem zweiten Ausdruck berechnet, und die Steuereinheit (4) die Heizleistung der Heizspule (210) gemäß der Induktanz des Resonanzkreisäquivalenzinduktors ($L_{eq}$) und dem Impedanzwert der Resonanzkreisäquivalenzimpedanz ($R_{eq}$) steuert,
wobei $L_{eq}$ die Induktanz des Resonanzkreisäquivalenzinduktors ($L_{eq}$) ist, $C_r$ die Kapazität des Resonanzkreiskondensators (Cr) ist, und T die Resonanzperiode (T) ist, und der erste Ausdruck als eine folgende mathematische Formel ausgedrückt ist:

$$L_{eq} = \left(\frac{1}{2\pi T\sqrt{C_r}}\right)^2 \quad ,$$

wobei $R_{eq}$ der Impedanzwert der Resonanzkreisäquivalenzimpedanz ($R_{eq}$) ist, $I_0$ der Referenzstromwert ($I_0$) ist, $\Delta t$ die Zeitdifferenz ($\Delta t$) ist, und $I_N$ der negative Spitzenstromwert des Resonanzkreisstroms ($I_r$) ist, und der zweite Ausdruck als eine folgende mathematische Formel ausgedrückt ist:

$$R_{eq} = \frac{2L_{eq}}{\Delta t + \frac{T}{4}} \ln\left(\frac{-I_0}{I_N} \frac{1}{\sin(\frac{\Delta t}{T} 2\pi)}\right) \quad .$$

2. Heizvorrichtung (1) nach Anspruch 1, wobei die Detektionseinheit (3) eine Parametererfassungseinheit (30) umfasst, und die Parametererfassungseinheit (30) elektrisch mit dem Resonanzkreis (22) gekoppelt ist, um den Resonanzkreisstrom ($I_r$) und die Resonanzkreisspannung ($V_r$) zu detektieren, wobei, wenn die Resonanzkreisspannung ($V_r$) Null ist, die Parametererfassungseinheit (30) die Resonanzperiode (T) und den negativen Spitzenstromwert ($I_N$) des Resonanzkreisstroms ($I_r$) gemäß dem Resonanzkreisstrom ($I_r$) und der Resonanzkreisspannung ($V_r$) erfasst.

3. Heizvorrichtung (1) nach Anspruch 2, wobei die Parametererfassungseinheit (30) umfasst:

   eine Nulldurchgang-Detektionsschaltung (300), die elektrisch mit dem Resonanzkreis (21) gekoppelt ist, wobei die Nulldurchgang-Detektionsschaltung (300) den Resonanzkreisstrom ($I_r$) und die Resonanzkreisspannung ($V_r$) detektiert, und die Nulldurchgang-Detektionsschaltung (300) die Resonanzperiode (T) gemäß dem Resonanzkreisstrom ($I_r$) und der Resonanzkreisspannung ($V_r$) erfasst; und
   eine Negativ-Spitzenwert-Detektionsschaltung (301), die elektrisch mit dem Resonanzkreis (21) gekoppelt ist, wobei die Negativ-Spitzenwert-Detektionsschaltung (301) den Resonanzkreisstrom ($I_r$) und die Resonanzkreisspannung ($V_r$) detektiert, und die Negativ-Spitzenwert-Detektionsschaltung (301) den negativen Spitzenstromwert ($I_N$) gemäß dem Resonanzkreisstrom ($I_r$) und der Resonanzkreisspannung ($V_r$) erfasst.

4. Heizvorrichtung (1) nach Anspruch 3, wobei die Nulldurchgang-Detektionsschaltung (300) umfasst:

   einen ersten Stromtransformator ($CT_1$), wobei ein Eingangsanschluss des ersten Stromtransformators ($CT_1$) elektrisch mit dem Resonanzkreis (21) gekoppelt ist, um den Resonanzkreisstrom ($I_r$) zu empfangen;
   einen ersten Widerstand ($R_1$), wobei ein erster Anschluss und ein zweiter Anschluss des ersten Widerstands ($R_1$) elektrisch mit einem Ausgangsanschluss des ersten Stromtransformators ($CT_1$) gekoppelt sind, und der zweite Anschluss des ersten Widerstands ($R_1$) elektrisch mit einem Erdungsanschluss (G) gekoppelt ist;
   einen Komparator (COM), wobei ein positiver Eingangsanschluss des Komparators (COM) elektrisch mit dem ersten Anschluss des ersten Widerstands ($R_1$) und dem Ausgangsanschluss des ersten Stromtransformators ($CT_1$) gekoppelt ist, und ein negativer Eingangsanschluss des Komparators (COM) elektrisch mit dem zweiten Anschluss des ersten Widerstands ($R_1$) und dem Erdungsanschluss (G) gekoppelt ist;
   einen zweiten Widerstand ($R_2$), der elektrisch zwischen einer Spannungsquelle ($V_1$) und einem Ausgangsanschluss des Komparators (COM) gekoppelt ist;
   eine Zenerdiode ($D_Z$), wobei eine Anode der Zenerdiode ($D_Z$) elektrisch mit dem Erdungsanschluss (G) gekoppelt ist, und eine Kathode der Zenerdiode ($D_Z$) elektrisch mit dem Ausgangsanschluss des Komparators (COM) gekoppelt ist; und
   einen ersten Kondensator ($C_1$), der elektrisch zwischen dem Ausgangsanschluss des Komparators (COM) und dem Erdungsanschluss (G) gekoppelt ist, wobei der erste Kondensator ($C_1$) und die Zenerdiode ($D_Z$) parallel zueinander elektrisch gekoppelt sind.

5. Heizvorrichtung (1) nach Anspruch 3, wobei die Negativ-Spitzenwert-Detektionsschaltung (301) umfasst:

   einen zweiten Stromtransformator ($CT_2$), wobei ein Eingangsanschluss des zweiten Stromtransformators ($CT_2$) elektrisch mit dem Resonanzkreis (21) gekoppelt ist, um den Resonanzkreisstrom ($I_r$) zu empfangen;
   einen dritten Widerstand ($R_3$), wobei ein erster Anschluss und ein zweiter Anschluss des dritten Widerstands ($R_3$) elektrisch mit einem Ausgangsanschluss des zweiten Stromtransformators ($CT_2$) gekoppelt sind, und der zweite Anschluss des dritten Widerstands ($R_3$) elektrisch mit einem Erdungsanschluss (G) gekoppelt ist;
   einen Verstärker (Camp) mit negativer Rückkopplung, wobei ein nicht-invertierender Anschluss des Verstärkers (Camp) mit negativer Rückkopplung elektrisch mit einem ersten Anschluss des dritten Widerstands ($R_3$) und

dem Ausgangsanschluss des zweiten Stromtransformators ($CT_2$) gekoppelt ist, und ein invertierender Anschluss des Verstärkers (Camp) mit negativer Rückkopplung elektrisch mit einem Ausgangsanschluss des Verstärkers (Camp) mit negativer Rückkopplung gekoppelt ist;

eine Diode (D), wobei eine Kathode der Diode (D) elektrisch mit dem Ausgangsanschluss des Verstärkers (Camp) mit negativer Rückkopplung gekoppelt ist;

einen vierten Widerstand ($R_4$), der elektrisch zwischen einer Anode der Diode (D) und dem Erdungsanschluss (G) gekoppelt ist; und

einen zweiten Kondensator ($C_2$), der elektrisch zwischen der Anode der Diode (D) und dem Erdungsanschluss (G) gekoppelt ist, wobei der zweite Kondensator ($C_2$) und der vierte Widerstand ($R_4$) parallel zueinander elektrisch gekoppelt sind.

6. Heizvorrichtung (1) nach Anspruch 4, wobei die Detektionseinheit (3) ferner einen Mikroprozessor (31) umfasst, und der Mikroprozessor (31) umfasst:

eine erste Berechnungseinheit (310), wobei der erste Ausdruck zuvor in der ersten Berechnungseinheit (310) gespeichert wird, und die erste Berechnungseinheit (310) die Induktanz des Resonanzkreisäquivalenzinduktors ($L_{eq}$) gemäß der Kapazität des Resonanzkreiskondensators ($C_r$), der Resonanzperiode (T), die von der Nulldurchgang-Detektionsschaltung (300) zur Verfügung gestellt wird, und dem ersten Ausdruck berechnet, und die erste Berechnungseinheit (310) ein erstes Berechnungsergebnis an die Steuereinheit (4) liefert; und

eine zweite Berechnungseinheit (311), wobei der zweite Ausdruck zuvor in der zweiten Berechnungseinheit (311) gespeichert wird, wobei die zweite Berechnungseinheit (311) das erste Berechnungsergebnis von der ersten Berechnungseinheit (310) erfasst, die zweite Berechnungseinheit (311) den Referenzstromwert ($I_0$), die Zeitdifferenz ($\Delta t$) und den negativen Spitzenstromwert ($I_N$) des Resonanzkreisstroms ($I_r$) gemäß dem Resonanzkreisstrom ($I_r$) und der Resonanzkreisspannung ($V_r$) erfasst, die zweite Berechnungseinheit (311) den Impedanzwert der Resonanzkreisäquivalenzimpedanz ($R_{eq}$) gemäß der Induktanz des Resonanzkreisäquivalenzinduktors ($L_{eq}$), der Zeitdifferenz ($\Delta t$), der Resonanzperiode (T), dem Referenzstromwert ($I_0$), dem negativen Spitzenstromwert ($I_N$) des Resonanzkreisstroms ($I_r$) und dem zweiten Ausdruck berechnet, und die zweite Berechnungseinheit (311) ein zweites Berechnungsergebnis an die Steuereinheit (4) liefert.

7. Heizvorrichtung (1) nach Anspruch 6, wobei der Mikroprozessor (31) ein digitaler Signalprozessor oder eine Mikrocontroller-Einheit ist.

8. Heizvorrichtung (1) nach Anspruch 1, wobei die Heizvorrichtung (1) ein Induktionskochherd ist.

9. Heizvorrichtung (1) nach Anspruch 1, wobei die Inverterschaltung (20) einen oberen Schalter ($Q_h$) und einen unteren Schalter ($Q_l$) umfasst, die miteinander verbunden sind, wobei der obere Schalter ($Q_h$) und der untere Schalter ($Q_l$) abwechselnd ein- und ausgeschaltet werden, und ein erster Anschluss und ein zweiter Anschluss des Resonanzkreises (21) jeweils mit zwei leitenden Anschlüssen des unteren Schalters ($Q_h$) elektrisch gekoppelt sind.

10. Detektionsverfahren für eine Detektionseinheit (3) einer Heizvorrichtung (1), wobei die Heizvorrichtung (1) ferner eine Resonanzschaltung (22) umfasst, die Resonanzschaltung (22) eine Inverterschaltung (20) und einen Resonanzkreis (21) umfasst, die Inverterschaltung (20) einen Resonanzkreisstrom ($I_r$) und eine Resonanzkreisspannung ($V_r$) zur Verfügung stellt, der Resonanzkreis (21) eine Heizspule (210), einen Resonanzkreiskondensator ($C_r$), einen Resonanzkreisäquivalenzinduktor ($L_{eq}$) und eine Resonanzkreisäquivalenzimpedanz ($R_{eq}$) umfasst, wobei das Detektionsverfahren die Schritte umfasst:

(a) (S1) Erfassen des Resonanzkreisstroms ($I_r$) und der Resonanzkreisspannung ($V_r$), um einen Referenzstromwert ($I_0$), einen ersten Nulldurchgang-Zeitpunkt, einen zweiten Nulldurchgang-Zeitpunkt, eine Zeitdifferenz ($\Delta t$), eine Resonanzperiode (T) und einen negativen Spitzenstromwert ($I_N$) zu erfassen, wobei der Referenzstromwert ($I_0$) ein Stromwert des Resonanzkreisstroms ($I_r$) ist, wenn die Resonanzkreisspannung ($V_r$) Null ist, die Zeitdifferenz ($\Delta t$) eine Zeitlänge zwischen einem Zeitpunkt, wenn die Resonanzkreisspannung ($V_r$) Null ist, und dem ersten Nulldurchgang-Zeitpunkt ist, und die Resonanzperiode (T) gemäß dem ersten Nulldurchgang-Zeitpunkt und dem zweiten Nulldurchgang-Zeitpunkt definiert ist, wobei der erste Nulldurchgang-Zeitpunkt ein erster Zeitpunkt ist, der einem ersten Nullwert des Resonanzkreisstroms ($I_r$) entspricht, nachdem die Resonanzkreisspannung ($V_r$) Null ist, und der zweite Nulldurchgang-Zeitpunkt ein zweiter Zeitpunkt ist, der einem zweiten Nullwert des Resonanzkreisstroms ($I_r$) entspricht, nachdem die Resonanzkreisspannung ($V_r$) Null ist;

(b) (S2) Berechnen einer Induktanz des Resonanzkreisäquivalenzinduktors ($L_{eq}$) gemäß einer Kapazität des Resonanzkreiskondensators ($C_r$), der Resonanzperiode (T) und einem ersten Ausdruck, wobei der erste Ausdruck als eine folgende mathematische Formel ausgedrückt ist:

$$L_{eq} = \left(\frac{1}{2\pi T \sqrt{C_r}}\right)^2 \ ,$$

wobei $L_{eq}$ die Induktanz des Resonanzkreisäquivalenzinduktors ($L_{eq}$) ist, $C_r$ die Kapazität des Resonanzkreiskondensators ($C_r$) ist, und T die Resonanzperiode (T) ist;

(c) (S3) Berechnen eines Impedanzwerts der Resonanzkreisäquivalenzimpedanz ($R_{eq}$) gemäß der Induktanz des Resonanzkreisäquivalenzinduktors ($L_{eq}$), der Zeitdifferenz ($\Delta t$), der Resonanzperiode (T), dem Referenzstromwert ($I_0$), dem negativen Spitzenstromwert ($I_N$) und einem zweiten Ausdruck, wobei der zweite Ausdruck als eine folgende mathematische Formel ausgedrückt ist:

$$R_{eq} = \frac{2L_{eq}}{\Delta t + \frac{T}{4}} \ln\left(\frac{-I_0}{I_N} \frac{1}{\sin(\frac{\Delta t}{T} 2\pi)}\right) \ ,$$

wobei $R_{eq}$ der Impedanzwert der Resonanzkreisäquivalenzimpedanz ($R_{eq}$) ist, $I_0$ der Referenzstromwert ($I_0$) ist, $\Delta t$ die Zeitdifferenz ($\Delta t$) ist, und $I_N$ der negative Spitzenstromwert ($I_N$) des Resonanzkreisstroms ($I_r$) ist; und

(d) (S4) Steuern einer Heizleistung der Heizspule (210) gemäß der Induktanz des Resonanzkreisäquivalenzinduktors ($L_{eq}$) und dem Impedanzwert der Resonanzkreisäquivalenzimpedanz ($R_{eq}$).

11. Detektionsverfahren nach Anspruch 10, wobei die Heizvorrichtung (1) ein Induktionskochherd ist, und der Schritt (b) außerdem einen Schritt des Bestimmens umfasst, ob ein Lebensmittelbehälter auf der Heizvorrichtung (1) platziert ist, gemäß der Induktanz des Resonanzkreisäquivalenzinduktors ($L_{eq}$) und dem Impedanzwert der Resonanzkreisäquivalenzimpedanz ($R_{eq}$).

12. Detektionsverfahren nach Anspruch 10, wobei die Heizvorrichtung (1) ein Induktionskochherd ist, und der Schritt (b) außerdem einen Schritt des Bestimmens eines Lastverhältnisses der Heizspule (210) umfasst, gemäß der Induktanz des Resonanzkreisäquivalenzinduktors ($L_{eq}$) und dem Impedanzwert der Resonanzkreisäquivalenzimpedanz ($R_{eq}$).

13. Detektionsverfahren nach Anspruch 10, wobei die Heizvorrichtung (1) ein Induktionskochherd ist, und der Schritt (b) außerdem einen Schritt des Erkennens eines Materials eines Lebensmittelbehälters auf der Heizvorrichtung (1) umfasst, gemäß der Induktanz des Resonanzkreisäquivalenzinduktors ($L_{eq}$) und dem Impedanzwert der Resonanzkreisäquivalenzimpedanz ($R_{eq}$).

**Revendications**

1. Dispositif de chauffage (1) comprenant:

un circuit résonnant (22) comprenant:

un circuit inverseur (20) configuré pour fournir un courant de réservoir résonnant ($I_r$) et une tension de réservoir résonnant ($V_r$); et
un réservoir résonnant (21) comprenant une bobine chauffante (210), un condensateur de réservoir résonnant (Cr), une bobine d'induction équivalente de réservoir résonnant ($L_{eq}$) et une impédance équivalente de réservoir résonnant ($R_{eq}$);

une unité de détection (3) couplée électriquement au circuit résonnant (22), dans lequel l'unité de détection (3) détecte le courant de réservoir résonnant ($I_r$) et la tension de réservoir résonnant ($V_r$) pour acquérir une valeur de courant de référence ($I_0$), un premier point temporel de passage à zéro, un deuxième point temporel de passage à zéro, une différence de temps ($\Delta t$), une période de résonance (T) et une valeur de courant de crête négative ($I_N$), dans lequel la valeur de courant de référence ($I_0$) est une valeur de courant du courant de réservoir résonnant ($I_r$) quand la tension de réservoir résonnant ($V_r$) est nulle, la différence de temps ($\Delta t$) est une durée entre un point temporel où la tension de réservoir résonnant ($V_r$) est nulle et le premier point temporel de passage à zéro, et la période de résonance (T) est définie selon le premier point temporel de passage à zéro et le deuxième point temporel de passage à zéro, dans lequel le premier point temporel de passage à zéro est un premier point temporel correspondant à une première valeur nulle du courant de réservoir résonnant ($I_r$) après que la tension de réservoir résonnant ($V_r$) est nulle, et le deuxième point temporel de passage à zéro est un deuxième point temporel correspondant à une deuxième valeur nulle du courant de réservoir résonnant ($I_r$) après que la tension de réservoir résonnant ($V_r$) est nulle; et

une unité de commande (4) configurée pour commander le circuit inverseur (20) pour délivrer en sortie le courant de réservoir résonnant ($I_r$) et la tension de réservoir résonnant ($V_r$), de sorte qu'une puissance de chauffage de la bobine chauffante (210) est réglable, dans lequel l'unité de détection (3) calcule une inductance de la bobine d'induction équivalente de réservoir résonnant ($L_{eq}$) d'après une capacité du condensateur de réservoir résonnant (Cr), la période de résonance (T) et une première expression, l'unité de détection (3) calcule une valeur d'impédance de l'impédance équivalente de réservoir résonnant ($R_{eq}$) d'après l'inductance de la bobine d'induction équivalente de réservoir résonnant ($L_{eq}$), la différence de temps ($\Delta t$), la période de résonance (T), la valeur de courant de référence ($I_0$), la valeur de courant de crête négative ($I_N$) et une deuxième expression, et l'unité de commande (4) commande la puissance de chauffage de la bobine chauffante (210) d'après l'inductance de la bobine d'induction équivalente de réservoir résonnant ($L_{eq}$) et la valeur d'impédance de l'impédance équivalente de réservoir résonnant ($R_{eq}$),

dans lequel $L_{eq}$ est l'inductance de la bobine d'induction équivalente de réservoir résonnant ($L_{eq}$), $C_r$ est la capacité du condensateur de réservoir résonnant (Cr) et T est la période de résonance (T), et la première expression est définie par la formule mathématique suivante:

$$L_{eq} = \left(\frac{1}{2\pi T\sqrt{C_r}}\right)^2 \ ,$$

dans lequel $R_{eq}$ est la valeur d'impédance de l'impédance équivalente de réservoir résonnant ($R_{eq}$), $I_0$ est la valeur de courant de référence ($I_0$), $\Delta t$ est la différence de temps ($\Delta t$), et $I_N$ est la valeur de courant de crête négative du courant de réservoir résonnant ($I_r$), et la deuxième expression est définie par la formule mathématique suivante:

$$R_{eq} = \frac{2L_{eq}}{\Delta t+\frac{T}{4}}\ln\left(\frac{-I_0}{I_N}\frac{1}{\sin(\frac{\Delta t}{T}2\pi)}\right) \ .$$

2. Dispositif de chauffage (1) selon la revendication 1, dans lequel l'unité de détection (3) comprend une unité d'acquisition de paramètre (30) et l'unité d'acquisition de paramètre (30) est couplée électriquement au réservoir résonnant (22) pour détecter le courant de réservoir résonnant ($I_r$) et la tension de réservoir résonnant ($V_r$), dans lequel, quand la tension de réservoir résonnant ($V_r$) est nulle, l'unité d'acquisition de paramètre (30) acquiert la période de résonance (T) et la valeur de courant de crête négative ($I_N$) du courant de réservoir résonnant ($I_r$) d'après le courant de réservoir résonnant ($I_r$) et la tension de réservoir résonnant ($V_r$).

3. Dispositif de chauffage (1) selon la revendication 2, dans lequel l'unité d'acquisition de paramètre (30) comprend:

un circuit de détection de passage à zéro (300) couplé électriquement au réservoir résonnant (21), dans lequel le circuit de détection de passage à zéro (300) détecte le courant de réservoir résonnant ($I_r$) et la tension de réservoir résonnant ($V_r$), et le le circuit de détection de passage à zéro (300) acquiert la période de résonance (T) d'après le courant de réservoir résonnant ($I_r$) et la tension de réservoir résonnant ($V_r$); et
un circuit de détection de valeur de crête négative (301) couplé électriquement au réservoir résonnant (21), dans lequel le circuit de détection de valeur de crête négative (301) détecte le courant de réservoir résonnant ($I_r$) et la tension de réservoir résonnant ($V_r$), et le circuit de détection de valeur de crête négative (301) acquiert la valeur de courant de crête négative ($I_N$) d'après le courant de réservoir résonnant ($I_r$) et la tension de réservoir résonnant ($V_r$).

4. Dispositif de chauffage (1) selon la revendication 3, dans lequel le circuit de détection de passage à zéro (300) comprend:

un premier transformateur de courant ($CT_1$), dans lequel une borne d'entrée du premier transformateur de

courant (CT$_1$) est couplée électriquement au réservoir résonnant (21) pour recevoir le courant de réservoir résonnant (I$_r$);

une première résistance (R$_1$), dans lequel une première borne et une deuxième borne de la première résistance (R$_1$) sont couplées électriquement à une borne de sortie du premier transformateur de courant (CT$_1$), et la deuxième borne de la première résistance (R$_1$) est couplée électriquement à une borne de masse (G);

un comparateur (COM), dans lequel une borne d'entrée positive du comparateur (COM) est couplée électriquement à la première borne de la première résistance (R$_1$) et à la borne de sortie du premier transformateur de courant (CT$_1$), et une borne d'entrée négative du comparateur (COM) est couplée électriquement à la deuxième borne de la première résistance (R$_1$) et à la borne de masse (G);

une deuxième résistance (R$_2$) couplée électriquement entre une source de tension (V$_1$) et une borne de sortie du comparateur (COM);

une diode Zener (D$_z$), dans lequel une anode de la diode Zener (D$_z$) est couplée électriquement à la borne de masse (G), et une cathode de la diode Zener (D$_z$) est couplée électriquement à la borne de sortie du comparateur (COM); et

un premier condensateur (C$_1$) couplé électriquement entre la borne de sortie du comparateur (COM) et la borne de masse (G), dans lequel le premier condensateur (C$_1$) et la diode Zener (D$_z$) sont couplés électriquement l'un à l'autre en parallèle.

**5.** Dispositif de chauffage (1) selon la revendication 3, dans lequel le circuit de détection de valeur de crête négative (301) comprend :

un deuxième transformateur de courant (CT$_2$), dans lequel une borne d'entrée du deuxième transformateur de courant (CT$_2$) est couplée électriquement au réservoir résonnant (21) pour recevoir le courant de réservoir résonnant (I$_r$);

une troisième résistance (R$_3$), dans lequel une première borne et une deuxième borne de la troisième résistance (R$_3$) sont couplées électriquement à une borne de sortie du deuxième transformateur de courant (CT$_2$), et la deuxième borne de la troisième résistance (R$_3$) est couplée électriquement à une borne de masse (G);

un amplificateur à contre-réaction (Camp), dans lequel une borne non inverseuse de l'amplificateur à contre-réaction (Camp) est couplée électriquement à une première borne de la troisième résistance (R$_3$) et à la borne de sortie du deuxième transformateur de courant (CT$_2$), et une borne inverseuse de l'amplificateur à contre-réaction (Camp) est couplée électriquement à une borne de sortie de l'amplificateur à contre-réaction (Camp);

une diode (D), dans lequel une cathode de la diode (D) est couplée électriquement à la borne de sortie de l'amplificateur à contre-réaction (Camp);

une quatrième résistance (R$_4$) couplée électriquement entre une anode de la diode (D) et la borne de masse (G); et

un deuxième condensateur (C$_2$) couplé électriquement entre l'anode de la diode (D) et la borne de masse (G), dans lequel le deuxième condensateur (C$_2$) et la quatrième résistance (R$_4$) sont couplés électriquement l'un à l'autre en parallèle.

**6.** Dispositif de chauffage (1) selon la revendication 4, dans lequel l'unité de détection (3) comprend en outre un microprocesseur (31), et le microprocesseur (31) comprend:

une première unité de calcul (310), dans lequel la première expression est préalablement stockée dans la première unité de calcul (310), et la première unité de calcul (310) calcule l'inductance de la bobine d'induction équivalente de réservoir résonnant (L$_{eq}$) d'après la capacité du condensateur de réservoir résonnant (Cr), la période de résonance (T) fournie par le circuit de détection de passage à zéro (300) et la première expression, et la première unité de calcul (310) fournit un premier résultat de calcul à l'unité de commande (4); et

une deuxième unité de calcul (311), dans lequel la deuxième expression est préalablement stockée dans la deuxième unité de calcul (311), dans lequel la deuxième unité de calcul (311) acquiert le premier résultat de calcul à partir de la première unité de calcul (310), la deuxième unité de calcul (311) acquiert la valeur de courant de référence (I$_0$), la différence de temps (Δt) et la valeur de courant de crête négative I$_N$ du courant de réservoir résonnant (I$_r$) d'après le courant de réservoir résonnant (I$_r$) et la tension de réservoir résonnant (V$_r$), la deuxième unité de calcul (311) calcule la valeur d'impédance de l'impédance équivalente de réservoir résonnant (R$_{eq}$) d'après l'inductance de la bobine d'induction équivalente de réservoir résonnant (L$_{eq}$), la différence de temps (Δt), la période de résonance (T), la valeur de courant de référence (I$_0$), la valeur de courant de crête négative (I$_N$) du courant de réservoir résonnant (I$_r$) et la deuxième expression, et la deuxième unité de calcul (311) fournit un deuxième résultat de calcul à l'unité de commande (4).

7. Dispositif de chauffage (1) selon la revendication 6, dans lequel le microprocesseur (31) est un processeur de signal numérique ou un microcontrôleur.

8. Dispositif de chauffage (1) selon la revendication 1, dans lequel le dispositif de chauffage (1) est une table de cuisson par induction.

9. Dispositif de chauffage (1) selon la revendication 1, dans lequel le circuit inverseur (20) comprend un interrupteur supérieur ($Q_h$) et un interrupteur inférieur ($Q_l$), qui sont connectés l'un à l'autre, dans lequel l'interrupteur supérieur ($Q_h$) et l'interrupteur inférieur ($Q_l$) sont alternativement rendus passants et bloqués, et une première borne et une deuxième borne du réservoir résonnant (21) sont respectivement couplées électriquement à deux bornes conductrices de l'interrupteur inférieur ($Q_h$).

10. Procédé de détection pour une unité de détection (3) d'un dispositif de chauffage (1), le dispositif de chauffage (1) comprenant en outre un circuit résonnant (22), le circuit résonnant (22) comprenant un circuit inverseur (20) et un réservoir résonnant (21), le circuit inverseur (20) fournissant un courant de réservoir résonnant ($I_r$) et une tension de réservoir résonnant ($V_r$), le réservoir résonnant (21) comprenant une bobine chauffante (210), un condensateur de réservoir résonnant ($C_r$), une bobine d'induction équivalente de réservoir résonnant ($L_{eq}$) et une impédance équivalente de réservoir résonnant ($R_{eq}$), dans lequel le procédé de détection comprend les étapes suivantes:

(a) (S1) détecter le courant de réservoir résonnant ($I_r$) et la tension de réservoir résonnant ($V_r$) pour acquérir une valeur de courant de référence ($I_0$), un premier point temporel de passage à zéro, un deuxième point temporel de passage à zéro, une différence de temps ($\Delta t$), une période de résonance (T) et une valeur de courant de crête négative ($I_N$), dans lequel la valeur de courant de référence ($I_0$) est une valeur de courant du courant de réservoir résonnant ($I_r$) quand la tension de réservoir résonnant ($V_r$) est nulle, la différence de temps ($\Delta t$) est une durée entre un point temporel où la tension de réservoir résonnant ($V_r$) est nulle et le premier point temporel de passage à zéro, et la période de résonance (T) est définie selon le premier point temporel de passage à zéro et le deuxième point temporel de passage à zéro, dans lequel le premier point temporel de passage à zéro est un premier point temporel correspondant à une première valeur nulle du courant de réservoir résonnant ($I_r$) après que la tension de réservoir résonnant ($V_r$) est nulle, et le deuxième point temporel de passage à zéro est un deuxième point temporel correspondant à une deuxième valeur nulle du courant de réservoir résonnant ($I_r$) après que la tension de réservoir résonnant ($V_r$) est nulle;
(b) (S2) calculer une inductance de la bobine d'induction équivalente de réservoir résonnant ($L_{eq}$) d'après une capacité du condensateur de réservoir résonnant ($C_r$), la période de résonance (T) et une première expression, dans lequel la première expression est définie par la formule mathématique suivante:

$$L_{eq} = \left(\frac{1}{2\pi T\sqrt{C_r}}\right)^2 \; ,$$

où $L_{eq}$ est l'inductance de la bobine d'induction équivalente de réservoir résonnant ($L_{eq}$), $C_r$ est la capacité du condensateur de réservoir résonnant ($C_r$), et T est la période de résonance (T);
(c) (S3) calculer une valeur d'impédance de l'impédance équivalente de réservoir résonnant ($R_{eq}$) d'après l'inductance de la bobine d'induction équivalente de réservoir résonnant ($L_{eq}$), la différence de temps ($\Delta t$), la période de résonance (T), la valeur de courant de référence ($I_0$), la valeur de courant de crête négative ($I_N$) et une deuxième expression, dans lequel la deuxième expression est définie par la formule mathématique suivante:

$$R_{eq} = \frac{2L_{eq}}{\Delta t + \frac{T}{4}} \ln\left(\frac{-I_0}{I_N} \frac{1}{\sin\left(\frac{\Delta t}{T}2\pi\right)}\right) \; ,$$

l'impédance équivalente de réservoir résonnant ($R_{eq}$), $I_0$ est la valeur de courant de référence ($I_0$), $\Delta t$ est la différence de temps ($\Delta t$), et $I_N$ est la valeur de courant de crête négative ($I_N$) du courant de réservoir résonnant ($I_r$); et
(d) (S4) commander une puissance de chauffage de la bobine chauffante (210) d'après l'inductance de la bobine d'induction équivalente de réservoir résonnant ($L_{eq}$) et la valeur d'impédance de l'impédance équivalente de réservoir résonnant ($R_{eq}$).

11. Procédé de détection selon la revendication 10, dans lequel le dispositif de chauffage (1) est une table de cuisson par induction, et l'étape (b) comprend en outre une étape consistant à déterminer si un récipient alimentaire est placé sur le dispositif de chauffage (1) d'après l'inductance de la bobine d'induction équivalente de réservoir résonnant ($L_{eq}$) et la valeur d'impédance de l'impédance équivalente de réservoir résonnant ($R_{eq}$).

12. Procédé de détection selon la revendication 10, dans lequel le dispositif de chauffage (1) est une table de cuisson par induction, et l'étape (b) comprend en outre une étape consistant à déterminer un taux d'utilisation de la bobine chauffante (210) d'après l'inductance de la bobine d'induction équivalente de réservoir résonnant ($L_{eq}$) et la valeur d'impédance de l'impédance équivalente de réservoir résonnant ($R_{eq}$).

13. Procédé de détection selon la revendication 10, dans lequel le dispositif de chauffage (1) est une table de cuisson par induction, et l'étape (b) comprend en outre une étape consistant à reconnaître un matériau d'un récipient alimentaire placé sur le dispositif de chauffage (1) d'après l'inductance de la bobine d'induction équivalente de réservoir résonnant ($L_{eq}$) et la valeur d'impédance de l'impédance équivalente de réservoir résonnant ($R_{eq}$).

# FIG. 1A

Detection unit — 3

Control unit — 4

Power supply circuit — 2

Resonant tank

Heating coil — 210

Inverter circuit

21

20

22

1

FIG. 1B

FIG. 2

FIG. 3

300

FIG. 4

(Voltage/Current)

(Time)

0V

0A

0V

0V

t0 t1 t2 t3

$\Delta t$

$I_0$

$I_N$

$T/4$

$T/2$

Control voltage for the upper switch

PWM signal

Resonant tank current

FIG. 5

$CT_2$

$R_3$

G

$C_{amp}$

+

-

D

$R_4$

$C_2$

301

The detection unit acquires the reference current value, the time difference, the first zero-crossing time point, the second zero-crossing time point, the resonant period and the negative peak current value according to the resonant tank current and the resonant tank voltage. —— S1

The detection unit calculates the inductance of the resonant tank equivalent inductor according to the capacitance of the resonant tank capacitor, the resonant period and the first expression. —— S2

The detection unit calculates the impedance value of the resonant tank equivalent impedance according to the inductance of the resonant tank equivalent inductor, the time difference, the resonant period, the reference current value, the negative peak current value and the second expression. —— S3

The control unit controls the heating power of the heating coil according to the inductance of the resonant tank equivalent inductor and the impedance value of the resonant tank equivalent impedance. —— S4

FIG. 6

**EP 4 207 944 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008238386 A1
- EP 2437573 B1